# EUROPEAN PATENT SPECIFICATION

(11) **EP 1 867 510 B1**
(45) Date of publication and mention of the grant of the patent: **17.03.2010**
(21) Application number: 06115521.4
(22) Date of filing: 15.06.2006
(51) Int. Cl.: B60J 7/043, B60J 7/053

(54) **Open roof construction for a vehicle**
Fahrzeugschiebedachkonstruktion
Construction de toit ouvrant pour véhicule

(43) Date of publication of application: 19.12.2007
(73) Proprietor: Inalfa Roof Systems Group B.V., 5804 AH Venray (NL)
(72) Inventor: Van Boxtel, Eduardus Christianus Henricus, 5411 BS, Zeeland (NL)
(74) Representative: Voncken, Bartholomeus Maria Ch.

(56) References cited:
- EP-A- 1 314 600
- DE-A1- 10 158 174
- DE-C1- 10 033 887
- FR-A1- 2 797 225

## Description

The invention relates to an open roof construction for a vehicle, comprising a roof opening defined in a stationary roof part and panel which can be tilted around a tilt axis near to its forward edge between a first position in which it substantially is positioned coplanarly with the stationary roof part and a second, tilted position in which it extends inclined relative thereto.

Because in such an open roof construction generally the tilt axis does not coincide with the forward edge of the panel, but is located at some distance behind and below said forward edge, it cannot be prevented that during the tilting motion of the panel towards its second, tilted position a downward motion will occur of the forward edge of the panel. Such a downward motion of the forward edge, however, is disadvantageous in view of the aerodynamics of the open roof construction, as well as in view of water management at the forward edge. Further, such a downward movement of the forward edge also has esthetical disadvantages.

EP-A-1.314.600 shows an open roof construction of the above type in which by means of a change of the relative position between the tilt axis and the stationary roof part, a compensation can be made for the tilt-induced downward movement of the forward edge of the panel.

It is an object of the present invention to provide an improved open roof construction of the type referred to above. Thus, in accordance with the present invention an open roof construction of the type referred to above is provided, which comprises means for, during a tilting motion of the panel towards the tilted position, changing the relative position between the tilt axis and the panel.

That means that the position where the tilt axis crosses the panel, is changed.

Although in the present description this concept of a changing relative position between the tilt axis and the panel is further elaborated, it should be noted that it is also possible to change the relative position between the tilt axis and both the panel and stationary roof part. In all instances it becomes possible to compensate for the downward movement of the forward edge of the panel during a movement of the panel towards its tilted position.

In a preferred embodiment of the open roof construction the panel is provided with an inclined curve accommodating a pin defining the tilt axis, which pin is movable in the inclined curve. By moving the pin in the inclined curve, the point of engagement between the pin (which defines the tilt axis) and the panel can be changed, thus changing the relative position between the tilt axis and the panel. For example, such a change could lead to an upward movement of the respective part of the panel, counteracting a downward movement caused by the tilting movement of the panel.

Still further, in such a case, the pin may be part of a slide which is movable to and fro relative to the stationary roof part. This embodiment offers a simple, yet nevertheless reliable construction for obtaining the desired change of relative position between the tilt axis and the panel.

Although the movement of the slide could be realised in many manners, it is advantageous to use a construction, in which the movement of the slide is caused by a linkage between slide and the part of the panel at a longitudinal distance from the tilt axis. Then, when the panel is moved towards it tilted position, such a movement is transferred to the slide by the linkage.

Preferably, the linkage comprises a linking arm extending inclined relative to the direction of the slide between the slide and the panel. The end of the linking arm connected to the panel will move in accordance with the tilting motion of the panel; the opposite end of the linking arm only can carry out a movement in accordance with the movement of the slide in corresponding guides therefore.

As an example, an open roof construction is mentioned in which the curve in the panel extends inclined downwardly and backwards relative to a forward edge of the panel and wherein the linking arm extends inclined upwardly and backwards between the slide and the panel.

Most of the previous embodiments refer to a situation, in which the pivot axis in which the pivot axis (pin) is part of the stationary roof part, and wherein such a pivot axis (pin) extends into a curve which is part of the panel. It is, however, conceivable too that the pivot axis (pin) is part of the panel and wherein the cooperating curve is part of the stationary roof part. Changes which are required with such an open roof construction for obtaining the same effect, will be directly clear to an expert.

The panel, for example, can be a transparent panel of a sunroof; however, the principles of the present invention also could be applied to other moving parts of an open roof construction for a vehicle.

Hereinafter the invention is further elucidated while referring to the drawing, in which an embodiment of an open roof construction in accordance with the present invention is illustrated. Herein:
Figure 1 shows, schematically, an elevational view of an embodiment of the open roof construction in a first position; and
Figure 2 the open roof construction according to figure 1 in its second, tilted position.

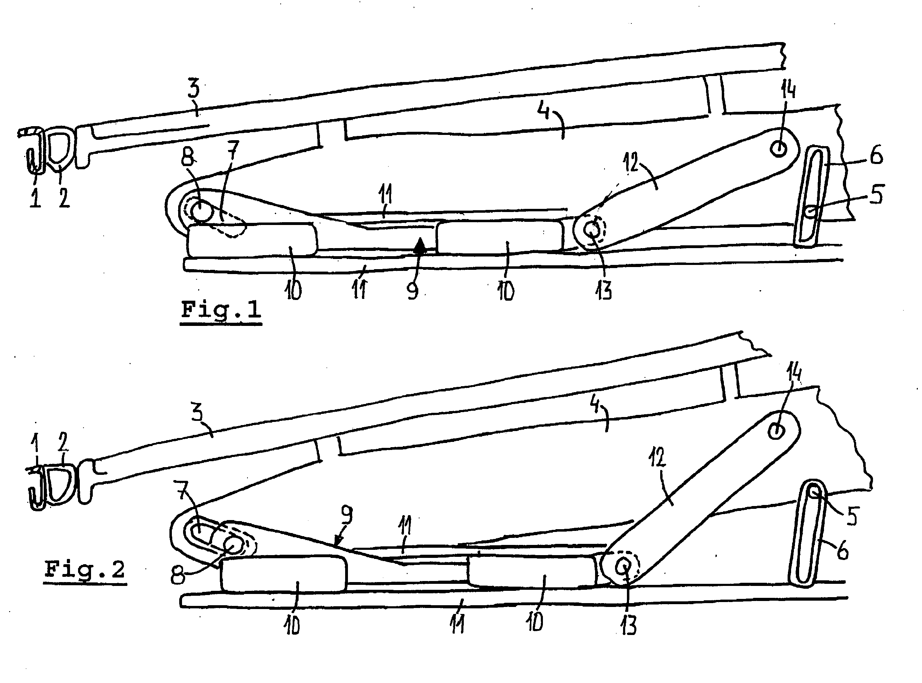

Figures 1 and 2 (which both are schematical elevational views of an open roof construction for a vehicle in accordance with the present invention) show a small part of a stationary roof part 1. By means of a seal 2 this stationary roof part 1 engages the forward edge of a tiltable panel 3. In figure 1 this tiltable panel 3 is represented in a first position in which a roof opening (not shown in detail, but extending behind the seal 2) is closed, whereas figure 2 shows a second, tilted position of the panel 3 in which part of the roof opening (mainly in the right part of the figure) is opened.

A support member 4 is attached to the panel 3 and carries a pin 5 which can move in a stationary guide 6 which forms part of the stationary roof of the vehicle. Details of a driving mechanism for initializing the movement of the pin 5 in the guide 6 are not shown. Such a mechanism, however, can be of a known type.

The support member 4 further is provided with a curve 7 at some distance ahead of pin 5 (it is noted that in figure 1 and 2 the forward end of the vehicle is supposed to be left). This curve 7 accommodates or houses a pin 8 which forms part of a slide 9. In the illustrated embodiment, said slide 9 comprises slide shoes 10 for a guided movement in a guide 11 which forms part of the stationary roof of the vehicle too.

Whereas pin 8 is positioned at a forward end of the slide 9, the opposite rearward end of the slide 9 is attached to a linking arm 12 which can pivot around pivot axis 13 which is part of the slide 9. An opposite end of the linking arm 12 is connected to support 4 by means of a pivot 14.

The illustrated embodiment of the open roof construction in accordance with the present invention operates as follows: when, starting from the first position illustrated in figure 1, the panel 3 is moved towards its tilted position as represented in figure 2 (as a result of which pin 5 moves upwardly in guide 6) linking arm 12 is pivoted, both around pivot axis 13 as around pivot 14. Because slide 9 only can move in guide 11, such a pivoting movement of linking arm 12 will lead to a movement of the slide 9 in a direction to the right as seen in figure 1 and figure 2 (or, in other words, away from the forward edge of the panel 3). As a result of such a movement of the slide 9 pin 8 will move to the right in curve 7, such that (due to the inclined orientation of the curve 7) support member 4 is lifted at its forward (left) end.

When the panel 3 is moved in a reverse direction towards its closed position, support member 4 will be lowered again at its forward (left) end.

As a result a compensation is obtained for a downward movement of the forward edge of the panel 3 (where the panel 3 meets the seal 2) as a result of the tilting movement of the panel 3.

The invention is not limited to the embodiment described before, which may be varied widely within the scope of the invention as defined by the appending claims. As one example of an alternative embodiment an open roof construction is mentioned, in which in the situation illustrated in figure 2 linking arm 12 does not extend inclined upwardly, but inclined downwardly. In such an open roof construction, moving the panel 3 towards its tilted position will lead to a movement of the slide to the left (instead of to the right). To obtain the same lifting of the left part of support member 4, then the inclination of curve 7 should be reversed, i.e. this curve 7 should extend inclined upwardly in a rearward direction (instead of inclined downwardly in a rearward direction as illustrated in the figures). Further it is conceivable, that a curve is provided in slide 9, whereas a pin is part of support member 4. Also combinations of such embodiments are feasible.

## Claims

1. Open roof construction for a vehicle, comprising a roof opening defined in a stationary roof part (1) and a panel (3) which can be tilted around a tilt axis (8) near to its forward edge between a first position in which it substantially is positioned coplanarly with the stationary roof part (1) and a second, tilted position in which it extends inclined relative thereto, **characterized in that** it comprises means for, during a tilting motion of the panel (3) towards the tilted position, changing the relative position between the tilt axis (8) and the panel (3).

2. Open roof construction according to claim 1, wherein the panel (3) is provided with an inclined curve (7) accomodating a pin (8) defining the tilt axis, which pin is movable in the inclined curve.

3. Open roof construction according to claim 2, wherein the pin (8) is part of a slide (9) which is movable to and fro relative to the stationary roof part (1).

4. Open roof part according to claim 3, wherein the movement of the slide (9) is caused by a linkage (12-14) between the slide and a part of the panel (3) at a longitudinal distance from the tilt axis (8).

5. Open roof construction according to claim 4, wherein the linkage comprises a linking arm (12) extending inclined relative to the direction of movement of the slide (9) between the slide and the panel.

6. Open roof construction according to claim 5, wherein the curve (7) in the panel (3) extends inclined downwardly and backwards relative to a forward edge of the panel and wherein the linking arm (12) extends inclined upwardly and backwards between the slide (9) and the panel (3).

7. Open roof construction according to any of the previous claims, wherein the panel (3) is a transparent panel of a sunroof.

## Patentansprüche

1. Offendachkonstruktion für ein Fahrzeug, aufweisend eine Dachöffnung, die in einem stationären Dachteil (1) definiert ist, und ein Paneel (3), das um eine Kippachse (8) nahe bei seinem vorderen Rand zwischen einer ersten Position, in welcher es im Wesentlichen koplanar zu dem stationären Dachteil (1) positioniert ist, und einer zweiten Kipp-Position, in welcher es sich schräg zu diesem erstreckt, gekippt werden kann, **dadurch gekennzeichnet, dass** es Mittel aufweist, um während einer Kippbewegung des Paneels (3) in Richtung zu der Kipp-Position die jeweilige Relativposition zwischen der Kippachse (8) und dem Paneel (3) zu ändern.

2. Offendachkonstruktion gemäß Anspruch 1, wobei das Paneel (3) eine schräge Kurve (7) aufweist, die einen Stift (8) aufnimmt, der die Kippachse definiert, wobei der Stift in der schrägen Kurve bewegbar ist.

3. Offendachkonstrukticn gemäß Anspruch 2, wobei der Stift (8) Teil eines Gleitstücks (9) ist, das relativ zu dem stationären Dachteil (1) hin und her bewergbar ist.

4. Offendachteil gemäß Anspruch 3, wobei die Bewegung des Gleitstücks (9) von einem Verbindungselement (12 bis 14) zwischen dem Gleitstück und einem Teil des Paneels (3) in einem Längsabstand von der Kippachse (8) bewirkt wird.

5. Offendachkonstruktion gemäß Anspruch 4, wobei das Verbindungselement einen Verbindungsarm (12) aufweist, der sich schräg zu der Bewegungsrichtung des Gleitstücks (9) zwischen dem Gleitstück und dem Paneel erstreckt.

6. Offendachkonstruktion gemäß Anspruch 5, wobei sich die Kurve (7) in dem Paneel (3) zu einem vorderen Rand des Paneels schräg nach unten und nach hinten erstreckt, und wobei sich der Verbindungsarm (12) zwischen dem Gleitstück (9) und dem Paneel (3) schräg nach oben und nach hinten erstreckt.

7. Offendachkonstruktion gemäß einem der vorhergehenden Ansprüche, wobei das Paneel (3) ein transparentes Paneel eines Schiebedachs ist.

## Revendications

1. Structure de toit ouvrant pour un véhicule, comprenant une ouverture de toit définie dans une partie fixe de toit (1) et un panneau (3) qui peut être incliné autour d'un axe d'inclinaison (8) près de son bord avant entre une première position dans laquelle il est sensiblement positionné de manière coplanaire par rapport la partie fixe de toit (1) et une deuxième position inclinée dans laquelle il s'étend de manière inclinée par rapport à la partie fixe de toit (1), **caractérisée en ce qu'**elle comprend un moyen pour modifier, pendant un mouvement d'inclinaison du panneau (3) vers la position inclinée, la position relative entre l'axe d'inclinaison (8) et le panneau (3).

2. Structure de toit ouvrant selon la revendication 1, dans laquelle le panneau (3) est muni d'une courbe inclinée (7) recevant un axe (8) définissait l'axe d'inclinaison, ledit axe étant mobile sur la courbe inclinée.

3. Structure de toit ouvrant selon la revendication 2, dans laquelle l'axe (8) fait partie d'une glissière (9) qui peut effectuer un mouvement de va-et-vient par rapport à la partie fixe de toit (1).

4. Structure de toit ouvrant selon la revendication 3, dans laquelle le mouvement de la glissière (9) est provoqué par une tringlerie (12-14) entre la glissière et une partie du panneau (3) à une distance longitudinale de l'axe d'inclinaison (8).

5. Structure de toit ouvrant selon la revendication 4, dans laquelle la tringlerie comprend un bras de liaison (12) s'étendant de manière inclinée par rapport à la direction du mouvement de la glissière (9) entre la glissière et le panneau.

6. Structure de toit ouvrant selon la revendication 5, dans laquelle la courbe (7) dans le panneau (3) s'étend de manière inclinée vers le bas et vers l'arrière par rapport à un bord avant du panneau et dans laquelle le bras de liaison (12) s'étend de manière inclinée vers le haut et vers l'arrière entre la glissière (9) et le panneau (3).

7. Structure de toit ouvrant selon l'une quelconque des revendications précédentes, dans laquelle le panneau (3) est un panneau transparent d'un toit ouvrant.
